# EUROPEAN PATENT SPECIFICATION

(11) **EP 2 829 735 B1**
(45) Date of publication and mention of the grant of the patent: **14.11.2018**
(21) Application number: 14178033.8
(22) Date of filing: 22.07.2014
(51) Int. Cl.: F04D 29/08, F02C 7/143, F04D 29/56, F04D 29/70

(54) **Axial compressor**
Axialkompressor
Compresseur axial

(30) Priority: 23.07.2013 JP 2013152807
(43) Date of publication of application: 28.01.2015
(73) Proprietor: Mitsubishi Hitachi Power Systems, Ltd., Yokohama 220-8401 (JP)
(72) Inventor: Takahashi, Yasuo, Yokohama,, Kanagawa 220-8401 (JP); Myoren, Chihiro, Yokohama,, Kanagawa 220-8401 (JP); Kawamura, Kohta, Yokohama,, Kanagawa 220-8401 (JP)
(74) Representative: MERH-IP Matias Erny Reichl Hoffmann Patentanwälte PartG mbB

(56) References cited:
- EP-A2- 1 793 090
- JP-A- H02 294 501
- US-A1- 2011 110 758
- US-A1- 2012 082 545

## Description

### BACKGROUND OF THE INVENTION

### 1. Field of the Invention

The present invention relates to an axial compressor for a gas turbine or an industrial use.

### 2. Description of the Related Art

Operating a gas turbine in, for example, summer results in a reduced gas turbine output due to a drop in inlet air density at a high atmospheric temperature. To solve this problem of the reduced output, a known method sprays water or other fluid droplets over inlet air of the compressor using a spray nozzle to thereby increase the inlet air density, thus improving the gas turbine output through an effect of inlet air cooling. In addition, with the droplets introduced into an inside of the compressor by increasing an amount of sprayed droplets, an effect of intermediate cooling reduces compressor work to thereby improve gas turbine efficiency. The fine droplets conveyed with an airflow into the inside of the compressor vaporize up to a saturation temperature of a stage while passing through rotor blade cascades and stator vane cascades, and reduce the temperature of a working fluid through latent heat of vaporization.

In a multistage axial compressor, the droplets are vaporized from the upstream side of the compressor, resulting in a reduced temperature of a mainstream. Thus, blade loading decreases on an upstream side of the compressor and increases on a downstream side of the compressor, in which a load distribution differs from that of a normal dry operation relative to a flow direction. To spray a large amount of droplets in the inside of the compressor, the foregoing necessitates engineering to increase the blade loading on the upstream side and reduce the blade loading on the downstream side in advance. No droplets are sprayed in a low-speed operating range of a gas turbine engineered as described above, such as during starting of the gas turbine. Thus, as compared with starting of an ordinary simple cycle gas turbine, a greater separation range may result from an unsteady fluid phenomenon in which a flow through an upstream blade cascade stalls as a result of a flow through a downstream blade cascade choking, what is called, a rotating stall.

To operate the compressor steadily in gas turbines, a stator vane (a variable stator vane) having a mechanism that varies an angle of attack (an angle of a blade chord relative to a direction of flow of the working fluid) is disposed upstream of the compressor. During an operation at low speeds, such as when starting the compressor, an inflow angle to the variable stator vane increases due to a reduced intake flow rate. This makes it necessary to adjust the angle of attack of the variable stator vane corresponding to the increased inflow angle by rotating the variable stator vane in a direction in which the flow is restricted. In contrast, during a high-speed operation, the variable stator vane is rotated in a direction in which the flow is increased to respond to an increased intake flow rate.

Axial compressors including stator vanes having such a variable mechanism are disclosed, for example, in JP-1990-294501-A and JP-2012-72763-A. JP-1990-294501-A discloses a structure having a reduced gap between taper surfaces of an inner peripheral side end portion of a variable stator vane and an outer peripheral portion of a rotor disc. JP-2012-72763-A discloses a structure that incorporates considerations for wear resistance of a sliding portion of a variable mechanism.

US 2012/0082545 A1 describes a variable vane assembly for a gas turbine engine. The variable vane assembly includes a vane operable to pivot about a pivot axis. The vane includes a flap portion positionable in a fluid stream. Further, the vane includes a stem portion for mounting the flap portion. The vane also includes a button portion positioned between the flap portion and the stem portion along the pivot axis. Even further, the variable vane assembly includes a bushing encircling the stem portion and abutting the button portion. The variable vane assembly also has a labyrinth seal positioned between the bushing and the button portion.

### SUMMARY OF THE INVENTION

The variable stator vane incorporated in a simple cycle gas turbine is generally rotated to vary its angle of attack during starting of the gas turbine or partial loading operation. In addition, the variable stator vane comprises a plurality of variable stator vanes disposed in an axial direction and a circumferential direction of a casing. The angle of attack (angle of rotation) of these variable stator vanes disposed in the same circumferential direction needs to be changed simultaneously according to the flow, which makes highly accurate angle control important. Techniques are known to improve sliding performance of the variable stator vane, such as incorporating a metal bushing on a rotational shaft of the variable stator vane and incorporating a thrust washer between an end face on the side of a casing and a casing inner peripheral surface of the variable stator vane.

Unfortunately, however, considerations are not very much given to improving sealing performance in the sliding portion between the variable stator vane and the casing. As a result, when water or other fluid droplets are to be sprayed inside the compressor having the variable stator vanes, in particular, droplets may leak from the variable stator vane mechanism to the outside of the casing due to a difference in pressure between the inside and outside of the casing. In addition, on a long-term perspective, rust may gather as a result of corrosion on the sliding portion between the rotational shaft of the variable stator vanes and the casing surface, resulting overall in degraded device reliability of the variable stator vane.

It is an object of the present invention to provide an axial compressor capable of preventing fluid leakage from a sliding portion between a variable stator vane and a casing. The above described object is achieved by the invention according to claim 1. The dependent claims describe further preferred developments.

An aspect of the present invention provides an axial compressor comprising: a droplet supply unit that supplies a working fluid before compression or being compressed with droplets; a variable stator vane having a rotational shaft inserted in a hole in a casing, the variable stator vane having an angle of attack varied through sliding motion relative to the casing caused by rotation of the rotational shaft; and/or a sealing structure provided in a sliding portion between a member slid relative to the casing during rotation of the rotational shaft and the casing. Further, there is provided: a counterbored groove formed around the rotational shaft in an outer peripheral surface of the casing; and a flange portion housed in the counterbored groove. The sealing structure is provided at a sliding portion and which the flange portion slides relative to the rotational shaft.

The present invention can prevent leakage of a fluid from the sliding portion between the variable stator vane and the casing to thereby improve reliability of the axial compressor.

### BRIEF DESCRIPTION OF THE DRAWINGS

The present invention will be described hereinafter with reference to the accompanying drawings.
Fig. 1 is a configuration diagram showing a gas turbine system including an inlet air spray mechanism according to an embodiment of the present invention;
Fig. 2 is a meridional cross-sectional view showing an axial compressor according to an embodiment of the present invention;
Fig. 3 is a cross-sectional view showing a variable stator vane structure according to an example which is not a part of the present invention;
Fig. 4 is a cross-sectional view showing a variable stator vane structure according to an another example which is not a part of the present invention; and
Fig. 5 is a cross-sectional view showing a variable stator vane structure according to an embodiment of the present invention.

### DESCRIPTION OF THE PREFERRED EMBODIMENTS

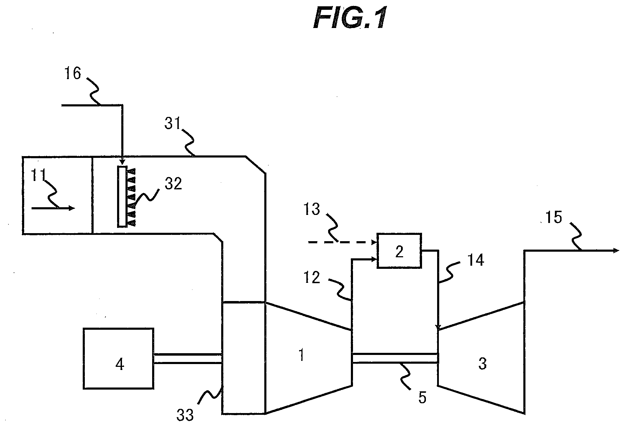

Preferred embodiments of the present invention will be described below with reference to the accompanying drawings. With reference to Fig. 1, an exemplary configuration of a gas turbine system including an inlet air spray mechanism will first be described. Fig. 1 is a schematic general configuration diagram showing the gas turbine system including the inlet air spray mechanism.

The gas turbine system shown in Fig. 1 includes a compressor 1, a combustor 2, and a turbine 3. The compressor 1 compresses air to thereby generate high-pressure air. The combustor 2 mixes and burns compressed air and fuel. The turbine 3 is rotatably driven by combustion gas at high temperature. The compressor 1 and the turbine 3 are mechanically connected to a generator 4 via a rotational shaft.

A flow of a working fluid in the gas turbine system shown in Fig. 1 will be described below. Air 11 as the working fluid flows into the compressor 1 and, while being compressed by the compressor 1, flows as high-pressure air 12 into the combustor 2. The combustor 2 mixes the high-pressure air 12 with fuel 13 to burn a resultant mixture and thereby generates high-temperature combustion gas 14. The combustion gas 14 rotates the turbine 3 before being released to an outside of the system as exhaust gas 15. The generator 4 is driven by turbine rotating power transmitted via a rotational shaft 5 that connects the compressor 1 to the turbine 3.

In a constant speed compressor with a constant volumetric flow rate commonly used in the gas turbine system, an increased inlet air temperature in summer lowers air density, resulting in a reduced mass flow rate of the inlet air. This necessitates reduction in a fuel flow rate in the combustor accordingly. Specifically, the higher the inlet air temperature of the compressor, the lower the output of the gas turbine.

Thus, a known method sprays water or other fluid droplets over the inlet air of the compressor to thereby improve the gas turbine output through an effect of inlet air cooling. One known method for inlet air cooling incorporates a medium-based inlet air cooler disposed in an air intake duct, inlet air passing through the inlet air cooler to reduce the inlet air temperature.

Another known method for inlet air cooling incorporates a droplet spray nozzle (droplet supply unit) 32 disposed in an air intake duct 31 as shown in Fig. 1. The method sprays fine droplets over air drawn into the air intake duct 31 before compression to thereby vaporize the droplets in the airflow. Latent heat of vaporization of the droplets is thereby utilized to reduce the inlet air temperature. From the method of spraying droplets, an intermediate cooling effect can also be expected. Specifically, an increase in the amount of droplets results in not only an inlet air cooling effect vaporizing droplets inside the air intake duct being achieved, but also the droplets being supplied into, and vaporized in, the inside of the compressor to achieve the intermediate cooling effect. This contributes to greater gas turbine efficiency thanks to the improved gas turbine output and reduced compression work.

The example shown in Fig. 1 includes the droplet spray nozzle 32 disposed at only one place in the air intake duct 31. The droplet spray nozzle 32 may nonetheless be disposed at any other place than the air intake duct 31 or at two or more places. For example, two droplet spray nozzles 32 are disposed, one in the air intake duct 31 and the other in an air inlet plenum 33 at an entrance of the compressor, so that inlet air spraying can be performed in two stages. Furthermore, the droplet spray nozzle may be disposed inside the compressor 1 and the droplet spraying may be performed not only over the working fluid before compression, but also the working fluid being compressed.

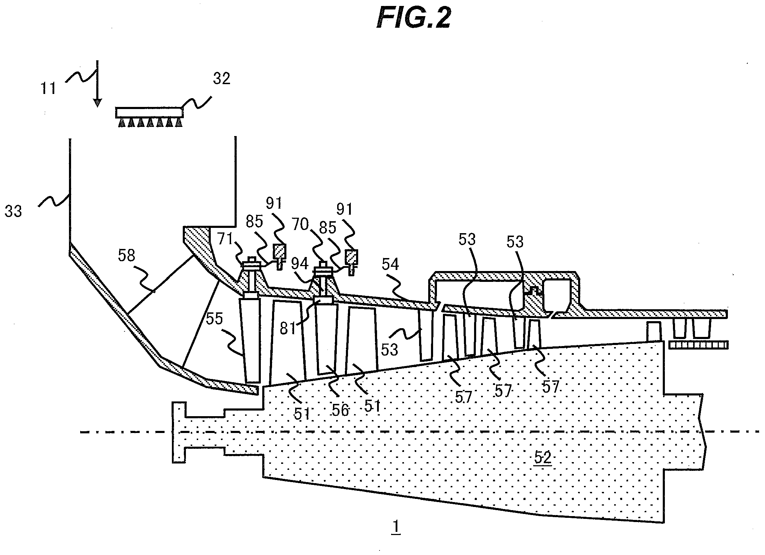

A detailed structure of the compressor 1 will be described below with reference to Fig. 2 that schematically shows a meridional cross-sectional view of the compressor 1. As shown in Fig. 2, the axial compressor 1 includes a rotor 52 and a casing 54. A plurality of rotor blade cascades 51, 57 is mounted on the rotor 52 that is rotated by an axial driving force given by a drive source (turbine 3). A plurality of stator vane cascades 56, 53 is mounted on an inner peripheral surface of the casing 54. An outer peripheral surface of the rotor 52 and the inner peripheral surface of the casing 54 form an annular flow path.

The rotor blade cascades 51, 57 and the stator vane cascades 56, 53 are alternately arranged along a rotor shaft direction, one set of a rotor blade cascade and a stator vane cascade constituting a stage. An inlet guide vane (IGV) 55 that controls the intake flow rate to thereby adjust gas turbine load is disposed upstream of the first-stage rotor blade 51. A variable mechanism 71 for varying the angle of attack of the inlet guide vane 55 is mounted on the inlet guide vane 55. The variable mechanism 71 is connected to a control ring 91 via a thin-plate lever 85. Rotating the control ring 91 rotates the inlet guide vane 55, which results in the angle of attack being varied.

The front-stage stator vane cascade (first-stage stator vane cascade) 56 disposed between the first-stage rotor blade cascade 51 and the second-stage rotor blade cascade 51 is a variable stator vane cascade, each of the vanes having a variable mechanism 70 for varying the angle of attack while, for example, the gas turbine is being started. For example, varying the angle of attack of the variable stator vane 56 during starting of the gas turbine allows a rotating stall to be prevented. Similarly to the variable mechanism 71, the variable mechanism 70 to be described in detail later is connected to a control ring 91 via a thin-plate lever 85.

In the compressor 1 shown in Fig. 2, of the stator vane cascades 56, 53 spaced apart from each other in the rotor shaft direction, only the first-stage stator vane cascade 56 has the variable mechanism 70. Nonetheless, any stator vane cascade on the second stage onward (e.g. the second-stage stator vane cascade 53) may have the variable mechanism 70. Especially with an inlet air spray compressor having a droplet spray nozzle, blade loading on the front-stage side increases, so that having variable stator vanes over a plurality of stages is advantageous for ensuring steady starting.

The air 11 that has flowed in from the air intake duct (not shown) has a circulation direction turned 90 degrees at the air inlet plenum 33 disposed upstream of the compressor 1 and is supplied into the compressor 1. Water or other fluid droplets are jetted from the droplet spray nozzle 32 disposed inside the air intake duct. Fine droplets are vaporized in the airflow and the latent heat of vaporization of the droplets reduces the temperature of gas flowing into the compressor 1, and at the same time, increases the inlet air density.

Of the fine droplets conveyed with the airflow, droplets that have not been vaporized until saturation flow into the inside of the compressor 1 as droplets. The droplets, while passing through the rotor blade cascades and the stator vane cascades inside the compressor 1, vaporize until reaching a saturation temperature and decrease the temperature of the working fluid being compressed. This intermediate cooling effect causes compression characteristics to approach isothermal compression, which reduces work of the compressor 1. Preferably, all droplets introduced into the compressor 1 vaporize completely in the airflow before a discharge port of the compressor 1.

Part of the droplets jetted from the droplet spray nozzle 32 may not contribute to cooling of the mainstream air and may thus be deposited as liquid film on different parts inside the compressor 1, forming drain.

Behavior of the droplets that do not contribute to cooling of the mainstream air of the compressor 1 will here be described. Part of the droplets sprayed by the droplet spray nozzle 32 collides with a wall surface of the air inlet plenum 33 to be deposited as liquid film. When sprayed droplets interfere with each other to form droplets with large particle diameters, such droplets are not conveyed with the airflow and collide with the wall surface to be deposited as liquid film. In addition, the droplets with large particle diameters collide with a strut 58 and the IGV 55 at the entrance of the compressor 1 with part thereof sticking to a blade surface to form liquid film.

Part of the liquid film affixed to the blade surface is split into secondary droplets with large particle diameters and the secondary droplets flow into the inside of the compressor 1. Droplets with large particle diameters collide with the rotor blades 51, 57 inside the compressor 1, are blown outwardly in a rotor radial direction by a centrifugal force of the rotor 52, and are deposited as liquid film on the inner peripheral surface of a casing 54.

Part of the liquid film on the inner peripheral surface of the casing 54 partly vaporizes by thermal conduction of the casing 54 and is partly split into secondary droplets, flying toward a downstream stage. The secondary droplets have large particle diameters and thus are more likely to collide with downstream rotor blades and stator vanes, forming liquid film.

The range over which the liquid film such as that described above exists extends from the first stage of the axial compressor 1 to a stage in which droplets vaporize completely inside the compressor (hereinafter, vaporization completion stage). The inventors confirmed that the liquid film occurs particularly in upstream to intermediate stages. Additionally, the mainstream temperature in an area near the vaporization completion stage is 300°C or higher and droplets, should they collide with the inner peripheral surface of the casing 54, are considered to vaporize instantaneously.

A schematic structure of the variable stator vane 56 will be described below with reference to Fig. 2. A plurality of variable stator vanes 56, being spaced at predetermined interval, is disposed circumferentially of the casing 54 in a particular stage of the compressor 1 (the first-stage stator vane in the example shown in Fig. 2).

The variable stator vane 56 includes a vane section 72, a stem section 94, and a stator vane base 81. The stem section 94 having a substantially cylindrical shape assumes a rotational shaft of the variable stator vane 56. The stator vane base 81 having a substantially disc shape is disposed in the variable stator vane 56 so as to be disposed between the stem section 94 and the vane section 72. The stator vane base 81 is disposed on, and to face, the inner peripheral surface of the casing 54. The thin-plate lever 85 has a first end connected to the stem section 94 and a second end connected rotatably to the control ring 91. It is noted that Fig. 2 shows only part of a cross section of the control ring 91.

The control ring 91 is formed into an annular shape and supported so that a central axis thereof coincides with a central axis of the rotor 52. One example of supporting the control ring 91 is to have the control ring 91 in contact with the casing 54 at a plurality of places (not shown). An actuator (not shown) is mounted on the control ring 91. The actuator rotates the control ring 91 about the central axis of the rotor 52. When the actuator is driven, the control ring 91 is rotated clockwise or counterclockwise circumferentially about the rotor 52. Rotating the control ring 91 circumferentially about the rotor 52 moves with the control ring 91 the second end of the thin-plate lever 85 on the side of the control ring 91 and causes the first end of the thin-plate lever 85 to rotate the stem section 94. This results in the angle of attack of the variable stator vane 56 being varied.

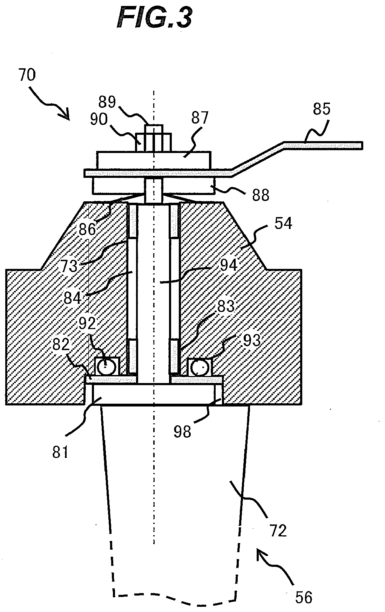

A detailed structure of the variable stator vane 56 in the compressor according to an example which is not a part of the present invention will be described below with reference to Fig. 3. In Fig. 3, the variable stator vane 56 includes the vane section 72, the stator vane base 81, the stem section 94, and a bolted stem section 89. Preferably, the vane section 72, the stator vane base 81, the stem section 94, and the bolted stem section 89 are integrally molded using, for example, casting.

The stem section 94 has a cylindrical shape and is inserted in a cylindrical through hole 73 formed radially relative to the casing 54. The stem section 94 assumes a rotational shaft of the variable stator vane 56. Rotating the stem section 94 about an axial center thereof varies the angle of attack of the vane section 72.

In the example shown in Fig. 3, the stem section 94 is inserted in the through hole 73 in the casing 54 after a thrust washer 82 is inserted. The thrust washer 82 is disposed between the stator vane base 81 and the inner peripheral surface of the casing 54. The thrust washer 82, having a low coefficient of friction and offering wear resistance, can slide the variable stator vane 56 and the casing 54 without requiring any lubrication.

A gap is formed between an outer periphery of the stem section 94 inserted in the through hole 73 in the casing 54 and the through hole 73 in the casing 54. Metal bushings 83 exhibiting outstanding slidability requiring no lubrication are disposed on both ends in the rotor radial direction in the gap so as to be positioned on the outer periphery of the stem section 94. A tube 84 is inserted over the stem section 94 so as to be disposed between the two metal bushings 83. The tube 84 supports the two metal bushings 83. While the two metal bushings 83 are disposed in the gap to surround the stem section 94 in the example shown in Fig. 3, one metal bushing 83 may be disposed around the stem section 94.

The bolted stem section 89 is provided at an end portion outside in the rotor radial direction in the stem section 94. The bolted stem section 89 protrudes on the outside of the casing 54 when the stem section 94 is inserted in the through hole 73 in the casing 54 and is inserted into a through hole (not shown) formed in the thin-plate lever 85. The portion of the bolted stem section 89 protruding on the outside of the casing 54 has screw threads thereon for engaging a nut 90. The bolted stem section 89 shown in Fig. 3 has a diameter smaller than diameters of other parts of the stem section 94.

In the example shown in Fig. 3, a disc spring 86, a lower washer 88, the thin-plate lever 85, and an upper washer 87 are inserted in sequence over the bolted stem section 89. Then, the nut 90 is finally threaded over the bolted stem section 89 to thereby connect the stem section 94 (the bolted stem section 89) to the thin-plate lever 85. This causes the upper washer 87 and the lower washer 88 to clamp the thin-plate lever 85 therebetween, thereby connecting the stem section 94 to the thin-plate lever 85.

Referring to Fig. 3, the disc spring 86 is disposed between the lower washer 88 and the casing 54 in the rotor radial direction. The disc spring 86 functions as follows. When the variable stator vane 56 is pushed down toward the inside in the rotor radial direction by stiffness of the thin-plate lever 85 while the control ring 91 is rotating, the disc spring 86, with its reaction, pushes up the variable stator vane 56 toward the outside in the rotor radial direction. The disc spring 86 thereby prevents the outer peripheral surface of the rotor 52 from interfering with a top end (tip) of the variable stator vane 56.

The stator vane base 81 having a substantially disc shape connects between the vane section 72 and the stem section 94. The stator vane base 81 is housed in a casing groove 98 that is a substantially disc-shaped recess (a countersunk hole) provided on the inner peripheral surface of the casing 54. The casing groove 98 has a diameter greater than a diameter of the through hole 73 in which the stem section 94 is inserted. The vane section 72 protrudes toward the inside in the rotor radial direction from a surface of the stator vane base 81 on the inside in the rotor radial direction. The stem section 94 protrudes toward the outside in the rotor radial direction from a surface of the stator vane base 81 on the outside in the rotor radial direction.

A sealing structure (sealing device) is provided between a member slid relative to the casing 54 as the stem section 94 rotates (part of the variable stator vane 56 or elements associated therewith; e.g. the stator vane base 81, the stem section 94, and the washer 81) and a portion over which the casing 54 relatively slides (a sliding portion). In the present embodiment, the sealing structure is provided at a portion at which the thrust washer 82 slides relative to the casing 54. The sealing structure is provided at a site in the casing 54 at which the surface of the thrust washer 82 on the outside in the rotor radial direction faces. The sealing structure includes a ring-shaped sealing groove 93 provided in a bottom of the casing groove 98 in the casing 54 and a ring-shaped sealing member 92 (e.g. an O-ring) housed in the sealing groove 93. It is noted that the sealing groove 93 shown in Fig. 3 is formed into a ring shape concentric with a central axis of the stem section 94 and the casing groove 98 and has an outside diameter smaller than a diameter of the casing groove 98.

Additionally, the variable stator vane 56 is pushed to the outside in the rotor radial direction by the disc spring 86 disposed on the outer peripheral surface of the casing 54. Thus, having the sealing structure on the outside in the rotor radial direction of the thrust washer 82 as in the present example enables sealing performance to be improved.

The following describes a problem that can occur when the droplet spray nozzle 32 supplies droplets into the inside of the compressor 1 in a configuration having no sealing structures as described above (the sealing groove 93 and the sealing member 92). In this case, droplets having large particle diameters collide with the rotor blade 51 inside the compressor 1 and are blown toward the outside in the rotor radial direction by a centrifugal force generated by the rotation of the rotor blade 51, thus forming liquid film on the inner wall surface of the casing 54. Droplets deposited on the inner wall surface of the casing 54 flow into a gap between the casing groove 98 and the thrust washer 82, travel along the gap between the through hole 73 in the casing 54 and the stem section 94 past the metal bushings 83 and the like, and may be discharged outside the casing 54 as drain.

The droplets flowing into the gap between the casing groove 98 and the thrust washer 82 are considered to come both from the upstream and downstream sides on the basis of the flow of the working fluid. It is nonetheless considered that the inflow of the droplets (drain) from the downstream side is more noticeable than that from the upstream side. This is because of the following reason. Specifically, the flow through the stator vanes including the variable stator vane 56 is decelerated to boost static pressure, resulting in a tendency toward a greater difference between pressure downstream of the stator vane and pressure outside the casing 54 (atmospheric pressure).

In addition, the variable stator vane 56 is disposed to extend throughout the entire circumference in the circumferential direction of the casing 54. The droplets introduced into the compressor 1 tend to be deposited on a lower half side of the casing 54 by gravitational influence. Specifically, occurrence of drain from the variable stator vane mechanism 56 on the lower half side of the casing 54 is noticeable, so that degraded device reliability can result due to drain deposited on the base of the gas turbine during operation of the gas turbine. The "lower half side of the casing 54", as used herein, refers to a lower-half portion of the casing 54 when the casing 54 is split into two along a horizontal plane passing through the central axis of the rotor 52, while an upper half side of the casing 54 is an upper-half portion above the lower half side.

The drain arising from the droplets spayed from the droplet spray nozzle not only degrades the device reliability of the gas turbine. On a short-term perspective, the inflow of drain mixed with dust into the sliding portion of the variable stator vane may also reduce control accuracy of the variable stator vane as affected by the dust. For example, a large difference in an opening degree may be produced among different variable stator vanes disposed in the rotor circumferential direction, resulting in separation occurring in part of the stator vanes disposed on an identical circumference. If this happens, separation of the stator vane cascade in the upstream stage in a multistage axial compressor greatly affects the stator vane cascade in the downstream stage, causing efficiency to be reduced. In addition, partial separation in the upstream stage degrades reliability of the compressor blade due to an unsteady phenomenon of flow such as a rotating stall and surging. On a long-term perspective, rust gathers as a result of corrosion on the sliding portion of the variable stator vane, which can degrade accuracy in the opening degree of the variable stator vane. For example, in the variable stator vane or a transonic airfoil profile, a difference of about ±5° relative to a design value of an incidence angle that represents a difference between a vane inlet metal angle and an inflow angle substantially doubles profile loss, which is highly likely to make noticeable the separation on the blade surface. It is thus important in terms of both performance and reliability to ensure that the incidence angle is free of deviation from the design value.

As described above, when droplets are supplied into the inside of the compressor, droplets that enter through the sliding portion of the variable stator vane is discharged out of the casing as drain, affecting performance and reliability of the compressor and gas turbine. A certain amount of a working medium is considered to escape from of the casing even with no droplets sprayed. Because the variable stator vane is disposed in an upstream stage in the compressor, the temperature of the working medium is low and only a very small amount of air flows out, so that the effect on device reliability in gas turbine operation is smaller than in drain discharge. Additionally, the sliding portion of the variable stator vane is unlikely to corrode, which eliminates the likelihood that device reliability will be degraded.

To solve the foregoing problem, the example not forming part of the present invention provides the sealing structure comprising the sealing groove 93 and the sealing member 92. Even when drain arising from the droplet spraying is deposited on the inner wall surface of the casing 54 in the variable stator vane 56, the sealing structure thus configured prevents, through an effect of the sealing member 92, entry of droplets in the gap between the stem section 94 and the through hole 73. Leak of drain to the outside of the casing 54 can thereby be prevented, so that device reliability can be improved.

Coating with considerations given to sliding performance and wear resistance has been applied to a surface of the thrust washer 82 on the inside in the rotor radial direction, specifically, the surface adjacent to the stator vane base 81. A surface of the thrust washer 82 on the outside in the rotor radial direction has not been subjected to coating. Thus, the thrust washer 82 has a larger contact area on its coated surface (the surface on the inside). A comparison of an amount of drain leak (an amount of drain leaking into the gap between the stem section 94 and the through hole 73) made in the thrust washer 82 between the outside surface and the inside surface in the rotor radial direction suggests that a less amount of drain leaks to the inside surface than to the outside surface. The present example in which the sealing structure is provided on the outside surface of the thrust washer 82 therefore achieves a particularly noticeable drain leak prevention effect.

The angle of attack of the variable stator vane 56 is frequently changed by rotating the stem section 94 at such timing as, for example, during starting of the gas turbine and partial loading operation. Thus, sliding between the thrust washer 82 and the sealing member 92 may cause the end face of the thrust washer 82 to wear, resulting in degraded sliding performance. However, coating with considerations given to sliding performance and wear resistance has been applied to the surface of the thrust washer 82 on the side adjacent to the stator vane base 81, but not to the surface on the side of the inner peripheral surface of the casing. The sealing member 92 disposed on the side of the thrust washer 82 adjacent to the inner peripheral surface side of the casing 54 therefore does not affect the coated surface of the thrust washer 82. This allows reliability of the thrust washer 82 to be maintained and occurrence of drain to be prevented.

The sealing member 92 may be a metal seal. In addition, an identical effect can be achieved by using a resin sealing member to ensure sliding performance. In this case, however, the sealing member needs to be replaced with a new one at regular intervals in terms of long-term reliability of the sealing member. Because the variable stator vane 56 is disposed in a stage upstream of the compressor 1, the temperature of the working fluid remains low when the droplets are not sprayed, which allows the resin sealing member to be applied.

The following describes an effect from pressure of the working medium inside the compressor 1. In general, the above-described angle-of-attack variable mechanism is applied to not only the stator vane on the front stage side (the variable stator vane 56), but also the IGV 55. Unlike the stator vane as a decelerating cascade, however, the IGV 55 is an accelerating cascade that accelerates the flow to give the first-stage rotor blade a swirl, causing negative pressure developing at the inlet and outlet of the IGV 55. The rotor blade then gives kinetic energy to the flow to thereby increase total pressure. The first-stage stator vane downstream thereof then decelerates the flow to thereby increase static pressure. As such, negative pressure develops in areas near the IGV 55, so that, in contrast to the case with the variable stator vane 56, a leak flow occurs from the outside of the casing 54 toward the inside of the compressor 1 via the through hole 73. If droplets are supplied into the inside of the compressor 1, this leak flow functions as sealing air against drain outflow, which prevents drain from occurring. Specifically, there is no need to install the sealing groove 93 and the sealing member 92 for drain prevention on the inner peripheral surface of the casing 54 facing a thrust washer (not shown) of the IGV 55.

When droplets are supplied into the inside of the compressor 1, negative pressure may develop in areas upstream and downstream of the first-stage stator vane depending of the amount of sprayed droplets because of small stage loading in the front stage. Understandably, in this case, there is no need to apply the sealing groove 93 and the sealing member 92 on the inner peripheral surface of the casing 54 facing the thrust washer 82 of the first-stage stator vane. However, even in such a case, preferably, the sealing groove 93 and the sealing member 92 are applied to a variable stator vane cascade present downstream of the first-stage stator vane, when the variable stator vane cascade causes the pressure of the working fluid to become higher than the atmospheric pressure. Application of the sealing groove 93 and the sealing member 92, as described above, only to those portions near the inner peripheral surface of the casing 54 at which pressure of the working medium is higher than the atmospheric pressure allows the number of parts used to be reduced and cost to be reduced. Moreover, the sealing member needs replacement depending on its service life within a maintenance period for the gas turbine. Thus, the reduction in the number of parts used also achieves an effect of reduction in maintenance cost.

As described earlier, the occurrence of droplets is noticeable in the variable stator vane 56 on the lower half side of the casing 54 by gravitational influence. This gives a good reason to the adoption of a configuration in which the sealing groove 93 and the sealing member 92 are installed only on the variable stator vane 56 provided on the lower half side of the casing 54 and none of the sealing groove 93 and the sealing member 92 are installed on the upper half side.

Additionally, various shapes such as an O-shape, a C-shape, and an E-shape may be applied for the sealing member 92. Application of the C-shape or E-shape by utilizing differential pressure between the working medium and the outside of the casing 54 allows the sealing performance against outflow of the drain to be improved.

With the IGV 55, the working medium has negative pressure. A C-shaped or E-shaped sealing member may be applied to the IGV 55 by utilizing differential pressure relative to the outside of the casing 54. A leak flow into the inside of the compressor 1 from the outside can thereby be prevented. This lessens an effect from the leak flow on the flow inside the compressor 1, thereby improving performance of the compressor 1.

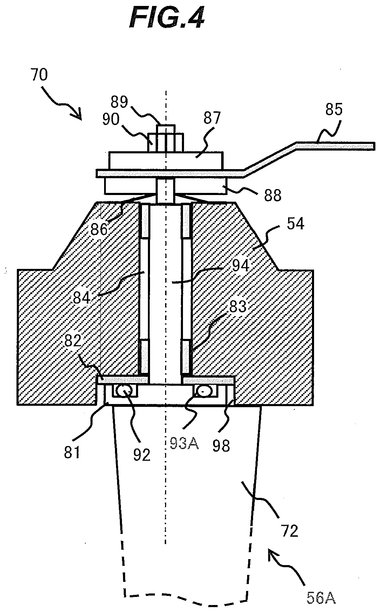

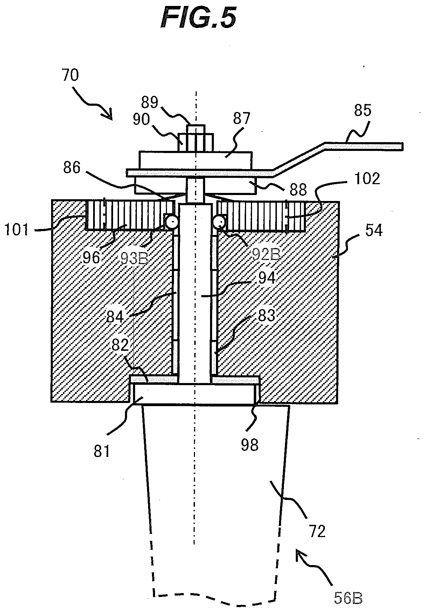

A compressor according to a second example which is not a part of the present invention will be described below with reference to Fig. 4. Fig. 4 is a cross-sectional view showing schematically a variable stator vane structure in the compressor according to a second example which is not a part of the present invention. Like or corresponding parts are identified by the same reference numerals as those used for the first example which is not a part of the present invention and descriptions for those parts may be omitted. (The same holds for Fig. 5.)

The compressor according to the second example differs from the compressor according to the first example shown in Fig. 3 in that a sealing structure is provided between a surface of the thrust washer 82 on the inside in the rotor radial direction and a surface of the stator vane base 81 on the outside in the rotor radial direction. In the second example which is not a part of the present invention, the stator vane base 81 has a ring-shaped sealing groove 93A formed in the surface thereof on the outside in the rotor radial direction (the surface that faces the surface of the thrust washer 82 on the inside in the rotor radial direction). The sealing groove 93A has the rotational shaft of the stem section 94 as a central axis thereof. In addition, the sealing member 92 capable of preventing outflow of drain from a gap between the stator vane base 81 and the thrust washer 82 is disposed in the sealing groove 93A.

Having the sealing groove 93A in the stator vane base 81, instead of the inner peripheral surface of the casing 54 as in the first example, is advantageous in machinability of the sealing groove 93A. Specifically, to machine the sealing groove 93 in the inner peripheral surface of the casing 54, the casing 54 is first manufactured by casting and then the sealing groove 93 is cut in the inner peripheral surface of the casing 54. The number of variable stator vanes 56 in each stage amounts to several tens (e.g. about 40 to 50) and machining the sealing grooves 93 throughout entire peripheries of the variable stator vanes takes a considerable amount of time. In contrast, machining the sealing groove 93A in the stator vane base 81 as in the second example involves machining of each individual stator vane. Specifically, machining the sealing groove in the stator vane base 81 is easy. This keeps the machining cost low.

The configuration in the second example results in the wear-resistant coating surface disposed on the side of the thrust washer 82 adjacent to the stator vane base 81 being in contact with the sealing member 92. This reduces the likelihood that the sealing member 92 will be worn and damaged, so that a risk of occurrence of drain can be reduced. The configuration also minimizes friction of the sliding portion between the sealing member 92 and the thrust washer 82, which allows accuracy in the opening degree of the variable stator vane to be maintained.

The first and second examples have been described with reference to Figs. 3 and 4. The sealing groove 93 may still be formed in both the stator vane base 81 and the inner peripheral surface of the casing 54 so that the sealing member 92 can be mounted in both the surface on the inside and the surface on the outside in the rotor radial direction of the thrust washer 82.

In the first and second examples, the thrust washer 82 is disposed between the stator vane base 81 and the inner peripheral surface of the casing 54. Alternatively, the stator vane base 81 may be made to directly slide over the inner peripheral surface of the casing 54 without having the thrust washer 82 interposed therebetween and a sealing structure is formed by forming the sealing groove 93 in, and mounting the sealing member 92 on, the sliding portion.

In addition, the sealing structure according to the first example is preferably used as a sealing structure for the casing 54 on the upper half side thereof. The sealing structure according to the second example is preferably used as a sealing structure for the casing 54 on the lower half side thereof. This is because, under gravitational influence, a gap tends to be formed between the casing 54 and the thrust washer 82 in the casing 54 on the upper half side thereof and between the thrust washer 82 and the stator vane base 81 in the casing 54 on the lower half side thereof.

A compressor according to an embodiment of the present invention will be described below with reference to Fig. 5. Fig. 5 is a cross-sectional view showing schematically a variable stator vane structure in the compressor according to the embodiment of the present invention. The compressor according to the embodiment differs from the compressor according to the first example shown in Fig. 3 in that a sealing groove 93B and a sealing member 92B are provided on the outside in the rotor radial direction of, out of the two metal bushings 83 disposed so as to sandwich the ring-shaped tube 84 therebetween, the metal bushing 83 disposed on the outside in the rotor radial direction.

The compressor shown in Fig. 5 is characterized by the following. Specifically, the casing 54 has a counterbored groove (recess) 101 formed by counterboring a disc concentric with the central axis of the stem section 94 in the outer peripheral surface of the casing 54. A ring-shaped flange portion 96 having a hole in which the stem section 94 is inserted as a center thereof is fitted in the counterbored groove 101. The flange portion 96 has the sealing groove 93B that assumes a ring-shaped counterbored groove formed around the hole therein. The sealing member 92B having a ring shape is housed in the sealing groove 93B and contacts the stem section 94. The flange portion 96 is fastened to the casing 54 with a plurality of bolts 102. The counterbored groove 101 is formed so as to be disposed around the stem section 94 in the outer peripheral surface of the casing 54. The sealing groove 93B is disposed at a portion at which the flange portion 96 slides relative to the stem section 94.

When the sealing member 92 is to be replaced with a new one in the compressor shown in Fig. 3 or 4, access to the sealing member 92 can only be gained after the variable stator vane 56 or 56A is removed from the inner peripheral side of the casing 54, which makes it necessary to disassemble the casing 54. As a result, the sealing member 92 is replaced only at a periodic inspection of the gas turbine. The configuration according to the embodiment, however, enables the sealing member 92B to be removed from the outside of the casing 54. Thus, when the sealing member 92B is worn and damaged, the sealing member 92B can be replaced with a new one without having to disassemble the casing 54. This improves maintainability.

Each of the first and second example, and the embodiment of the present invention described heretofore can prevent leakage of droplets occurring from the sliding portion of the variable stator vane in the axial compressor that has the intermediate cooling effect from spraying of the droplets over the intake air and thus can provide an axial compressor offering reliability.

It should be noted that the present invention is not limited to the above-described preferred embodiment and various changes may be made without departing from the scope of the invention as defined in the appended claims.

## Claims

1. An axial compressor comprising:
a variable stator vane (56, 56A, 56B) having a rotational shaft inserted in a hole in a casing (54), the variable stator vane (56, 56A, 56B) having an angle of attack varied through sliding motion relative to the casing (54) caused by rotation of the rotational shaft; and
a sealing structure (92, 93, 93A, 92B, 93B) provided in a sliding portion between the casing (54) and a member slid relative to the casing (54) during rotation of the rotational shaft, **characterized in that** the compressor further comprises:
a droplet supply unit (32) that supplies droplets to a working fluid before compression or being compressed;
a counterbored groove (101) formed around the rotational shaft in an outer peripheral surface of the casing (54); and
a flange portion (96) housed in the counterbored groove (101), wherein
the sealing structure (92B, 93B) is provided at a sliding portion at which the flange portion slides relative to the rotational shaft.

2. The axial compressor of claim 1, wherein a sealing structure (92, 93) is provided in a sliding portion between the member slid relative to the casing (54) and a lower half side of the casing (54).

3. The axial compressor of claim 1, wherein the sealing structure (92, 93) is provided in a portion having pressure of a working medium higher than atmospheric pressure near the casing.

## Patentansprüche

1. Axialverdichter, der Folgendes umfasst:
eine variable Statorplatte (56, 56A, 56B), die eine Drehwelle besitzt, die in ein Loch in einem Gehäuse (54) eingesetzt ist, wobei die variable Statorplatte (56, 56A, 56B) einen Anströmwinkel besitzt, der durch Gleitbewegung relativ zu dem Gehäuse (54), die durch eine Drehung der Drehwelle verursacht wird, verändert wird; und
eine Dichtungsstruktur (92, 93, 93A, 92B, 93B), die in einem Gleitabschnitt zwischen dem Gehäuse (54) und einem Element, das relativ zu dem Gehäuse (54) während der Drehung der Drehwelle gleitet, vorgesehen ist, **dadurch gekennzeichnet, dass** der Verdichter ferner Folgendes umfasst:
eine Tröpfchenzufuhreinheit (32), die einem Arbeitsfluid vor oder während der Verdichtung Tröpfchen zuführt;
eine Senkungsnut (101), die um die Drehwelle in einer äußeren Umfangsoberfläche des Gehäuses (54) ausgebildet ist; und
einen Flanschabschnitt (96), der in der Senkungsnut (101) aufgenommen ist, wobei
die Dichtungsstruktur (92B, 93B) an einem Gleitabschnitt vorgesehen ist, an dem der Flanschabschnitt relativ zu der Drehwelle gleitet.

2. Axialverdichter nach Anspruch 1, wobei eine Dichtungsstruktur (92, 93) in einem Gleitabschnitt zwischen dem Element, das relativ zu dem Gehäuse (54) gleitet, und einer unteren halben Seite des Gehäuses (54) vorgesehen ist.

3. Axialverdichter nach Anspruch 1, wobei die Dichtungsstruktur (92, 93) in einem Abschnitt vorgesehen ist, in dem der Druck eines Arbeitsmediums höher als der Atmosphärendruck in der Nähe des Gehäuses ist.

## Revendications

1. Compresseur axial comprenant :
une aube de stator variable (56, 56A, 56B) ayant un arbre rotatif inséré dans un trou dans un carter (54), l'aube de stator variable (56, 56A, 56B) ayant un angle d'attaque qui varie par un mouvement de coulissement par rapport au carter (54) entraîné par une rotation de l'arbre rotatif ; et
une structure d'étanchement (92, 93, 93A, 92B, 93B) prévue dans une portion coulissante entre le carter (54) et un élément qui coulisse par rapport au carter (54) pendant la rotation de l'arbre rotatif,
**caractérisé en ce que** le compresseur comprend en outre :
une unité d'alimentation de gouttelettes (32) qui alimente des gouttelettes à un fluide de travail avant la compression ou pendant la compression ;
une rainure contrepercée (101) formée autour de l'arbre rotatif dans une surface périphérique extérieure du carter (54) ; et
une portion en bride (96) logée dans la rainure contrepercée (101), dans lequel
la structure d'étanchement (92B, 93B) est prévue au niveau d'une portion coulissante à laquelle la portion en bride coulisse par rapport à l'arbre rotatif.

2. Compresseur axial selon la revendication 1, dans lequel une structure d'étanchement (92, 93) est prévue dans une portion coulissante entre l'élément qui coulisse par rapport au boîtier (54) et un côté de la moitié inférieure du carter (54).

3. Compresseur axial selon la revendication 1, dans lequel la structure d'étanchement (92, 93) est prévue dans une portion dans laquelle la pression d'un fluide de travail est plus élevée que la pression atmosphérique près du carter.
